(19) **Europäisches Patentamt**
**European Patent Office**
**Office européen des brevets**

(11) **EP 1 903 306 A2**

(12) **EUROPEAN PATENT APPLICATION**

(43) Date of publication:
**26.03.2008 Bulletin 2008/13**

(51) Int Cl.:
**G01C 21/16** (2006.01) **G01S 5/14** (2006.01)

(21) Application number: **07018292.8**

(22) Date of filing: **18.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **19.09.2006 US 523127**

(71) Applicant: **Alpine Electronics, Inc.**
**Tokyo,**
**141 (JP)**

(72) Inventor: **Hoshizaki, Takayuki**
**Torrance**
**California, 90501-1162 (US)**

(74) Representative: **Klunker . Schmitt-Nilson . Hirsch**
**Winzererstrasse 106**
**80797 München (DE)**

(54) **Method and system for estimating ground vehicle dynamics based on an integrated MEMS-INS/GPS navigation system**

(57) A method of compensating performance of low-cost MEMS (microelectro mechanical systems) inertial sensors in an integrated INS/GPS navigation system for automotive application is disclosed. The proposed method includes velocity and inertial sensor output conditions featured in ground vehicle dynamics. Using the conventional Kalman filter based INS/GPS system, implementation of the prescribed conditions in the present invention additionally to the GPS measurements shows accurate motion tracking even when GPS signal dropouts last for more than 2 minutes. Another aspect of the disclosure is an integrated INS/GPS navigation system which utilizes MEMS based inertial sensors for maintaining high position tracking accuracy even when a GPS signal is lost or unavailable for a long period of time by incorporating the predefined vehicle dynamics conditions when calculating optimum estimates through the Kalman filtering process.

Fig. 1

EP 1 903 306 A2

**Description**

FIELD OF THE INVENTION

This invention relates to a method involving a vehicle navigation system, and more particularly, to a vehicle dynamics conditioning for an integrated INS/GPS navigation system which utilizes microelectro mechanical systems (MEMS) based inertial sensors for maintaining high position tracking accuracy even when a GPS signal is lost or unavailable for a long period of time.

BACKGROUND OF THE INVENTION

The inertial navigation system (INS) is a widely used technology for guidance and navigation of a vehicle. The INS is composed of an inertial measurement unit (IMU) and a processor wherein an IMU houses accelerometers and gyroscopes which are inertial sensors detecting platform motion with respect to an inertial coordination system. An important advantage of the INS is independence from external support, i.e., it is self-contained. However, the INS cannot provide high accuracy at long ranges. Inertial sensors are subject to errors that tend to accumulate over time, i.e., the longer the drive time, the greater the inaccuracy.

More recent developments in global positioning system (GPS) have made high accuracy vehicle navigation possible at low cost. However, since the GPS relies on GPS satellites, it is susceptible to jamming, RF (radio frequency) interference and multipath problems. Although the GPS provides accurate position and velocity over longer time periods, the GPS involves occasional large multipath errors and signal dropouts. Therefore, efforts are made to develop an integrated INS/GPS navigation system by combining the outputs of a GPS and an INS using a Kalman filter to remedy performance problems of both systems.

Inertial sensors used to be expensive and bulky only used in precision application, for example, aerospace and military navigation. For establishing an IMU package in a compact and inexpensive manner, efforts have been made to develop microelectro mechanical systems (MEMS) sensors. After commercialization of low-cost, small, but noisier MEMS inertial sensors, numerous researchers have been studying mitigation of quick divergence in MEMS inertial measurement unit (IMU) based INS/GPS navigation systems in case of GPS dropouts. While some propose use of aiding sources, e.g., a video sensor, altimeter, or magnetometer, others try to find general solutions by creating Kalman filter-like new filtering techniques. Even using those new filtering techniques, however, MEMS based INS/GPS systems diverge when GPS dropouts last for 10 seconds or so.

Therefore, there is a need of a MEMS based integrated INS/GPS navigation system which is capable of maintaining high positioning accuracy even when a GPS signal is lost or unavailable for a long period of time.

SUMMARY OF THE INVENTION

It is, therefore, an objective of the present invention to provide a method to use conditions featured in ground vehicle dynamics additionally to GPS measurements for an integrated INS/GPS navigation system to achieve high accuracy.

It is another object of the present invention to provide a low cost integrated INS/GPS navigation system which utilizes low cost MEMS sensors in its IMU and can provide high accuracy position, velocity, and orientation estimates even in the case of long lasting GPS dropouts.

This invention focuses on ground-vehicle application and utilizes features in the platform dynamics to curb navigation divergence, resulting in accurate platform motion tracking even GPS dropouts last for more than 2 minutes.

One aspect of the present invention is a navigation method of conditioning ground vehicle's dynamics for low-cost MEMS based INS/GPS navigation systems. The method includes the steps of:

(a) defining vehicle dynamics conditions in advance as a function of accelerations and angular rates obtained from inertial sensors;
(b) receiving the accelerations and angular rates corresponding to coordinates of a ground vehicle from inertial sensors mounted on the INS;
(c) detecting a current condition of the vehicle by evaluating the accelerations and angular rates from the inertial sensor;
(d) sending measured data indicative of the detected vehicle dynamics condition to a Kalman filter which integrates the INS and GPS to conduct a Kalman filter processing incorporating the vehicle dynamics condition; and
(e) repeating the steps (b) to (d) to obtain optimum estimates of current vehicle position, velocity and orientation.

Another aspect of the present invention is an integrated INS/GPS navigation system implementing low-cost MEMS sensors for a ground vehicle. The integrated INS/GPS navigation system includes:

an INS having an inertial measurement unit (IMU) which incorporates MEMS sensors;
a GPS receiver which receives satellite signals from a plurality of satellites to produce GPS measurements indicating an absolute position of the ground vehicle;
a Kalman filter which combines outputs of the INS and the GPS receiver and performs a Kalman filter processing; and
a vehicle dynamics conditioning (VDC) controller which controls an overall operation of the navigation system including vehicle dynamics conditions detected from output of the MEMS sensors.

The vehicle dynamics conditions include a normal condition, a cornering condition and a stationary condition of the ground vehicle.

According to the present invention, in addition to a conventional integrated INS/GPS navigation system in which outputs of a GPS and an INS are combined by using a Kalman filter, the measured values indicative of predefined vehicle dynamics conditions are also provided to the Kalman filter to obtain optimum estimates of the current position, velocity and orientation of the ground vehicle. As a result, errors involved in tracking the motion of the vehicle is corrected not only by the GPS but the vehicle dynamics conditioning as well. Since the vehicle dynamics conditioning is repeated by a frequency much higher than that of the GPS output, the amount of accumulated error becomes small because the error is corrected within a short period of time. Further, since the accumulated error becomes small, low cost and noisy MEMS sensors can be used in the integrated INS/GPS navigation system.

BRIEF DESCRIPTION OF THE DRAWINGS

Figure 1 is a schematic block diagram showing an example of basic configuration of the integrated INS/GPS navigation system of the present invention which is typically mounted on a ground vehicle.
Figures 2A-2C are schematic diagrams showing the IMU and the inertial sensors incorporated in the IMU where Figure 2A is a schematic block diagram showing a basic structure of the IMU, and Figures 2B and 2C are schematic diagrams depicting an IMU body coordinate system and a vehicle coordinate system, respectively.
Figure 3 is a flow chart showing an example of basic operational process of vehicle dynamics conditioning in accordance with the present invention.
Figures 4A-4C illustrate vector patterns involved in cornering conditions of a vehicle when the coordinate system is fixed to the ground where Figure 4A shows a left cornering condition, Figure 4B shows a right cornering condition, and Figure 4C shows the cornering of the vehicle where the pattern (1) shows a coordinated turn, the pattern (2) shows a side slip turn, and the pattern (3) shows an overshoot and sideslip turn.
Figure 5 is a flow chart showing the steps of detecting the stationary condition of the vehicle using IMU outputs in the dynamics conditioning method of the present invention.
Figures 6A and 6B are schematic diagrams showing patterns of tracking error and its correction versus time in the integrated INS/GPS navigation system where Figure 6A is a pattern involved in the conventional technology, and Figure 6B is a pattern involved in the vehicle dynamics conditioning of the present invention.
Figure 7 shows the navigation position estimates using a conventional loosely coupled INS/GPS navigation system and on-road data from an IMU and a GPS receiver where the vehicle is running through a multi storied parking structure.
Figure 8 shows the navigation position estimates using a loosely coupled INS/GPS navigation system incorporating the dynamics conditioning method of the present invention using the same data set as shown in Figure 7.
Figure 9 shows the magnified view of Figure 8.
Figure 10 shows the three dimensional view of Figure 9.

DETAILED DESCRIPTION OF THE PREFERRED EMBODIMENT

The present invention will be described in detail with reference to the accompanying drawings. The method of the present invention makes use of the conditions featured in ground vehicle dynamics in addition to the GPS measurements for an integrated INS/GPS navigation system. Such vehicle dynamics conditions are determined by evaluating measured values obtained by inertial sensors which are low cost MEMS based sensors. In other words, in addition to a conventional integrated INS/GPS navigation system in which outputs of a GPS and an INS are combined by a Kalman filter, the measured values indicative of predefined vehicle dynamics conditions are also provided to the Kalman filter to obtain optimum estimates of the current position, velocity and orientation (direction) of the ground vehicle. As a result, errors involved in tracking the motion of the vehicle is corrected not only by the GPS but the vehicle dynamics conditioning as well. Since the vehicle dynamics conditioning is repeated by a frequency much higher than that of the GPS output, the amount of accumulated error becomes small because the error is corrected within a short period of time. Further, since the accumulated error becomes small, low cost, noisy MEMS sensors can be used in the integrated INS/GPS navigation system.

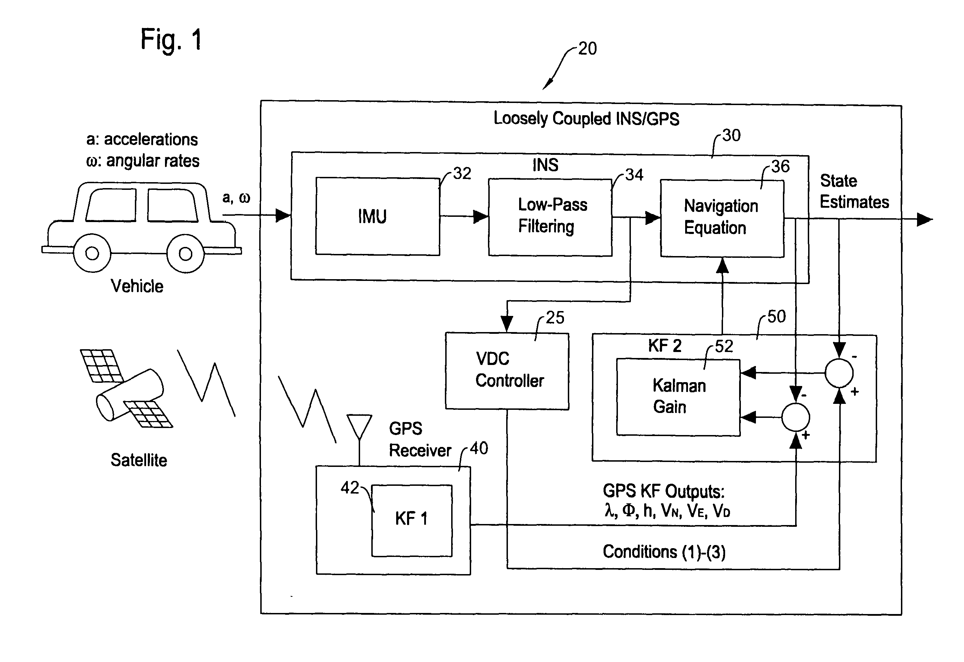

Figure 1 is a schematic block diagram showing an example of basic configuration of the integrated INS/GPS navigation system 20 of the present invention which is typically mounted on a ground vehicle. The INS/GPS navigation system 20 includes a vehicle dynamics conditioning (VDC) controller 25, an inertial navigation system (INS) 30, a GPS (global positioning system) receiver 40, and a Kalman filter 50 (KF-2). Unlike ordinary GPS navigation systems widely used in automobiles today, the integrated INS/GPS navigation system 20 of the present invention does not use any speed pulse sensor to detect the moving distance of the automobile. Therefore, it is no longer necessary to establish complicated wiring in the vehicle for connecting a speed pulse sensor to a navigation system's processor. Further, it is unnecessary to adjust the outputs of the speed sensor which was necessary in the conventional technology because the definition of speed pulse is different from manufacturer to manufacturer of speed pulse sensors.

In Figure 1, the VDC controller 25 can be a part of a main CPU to control an overall operation of the navigation system including the vehicle dynamics conditioning of the present invention. The INS 30 is configured by an inertial measurement unit (IMU) 32, a low-pass filtering unit 34, and a navigation equation unit 36. The GPS receiver 40 includes a Kalman filter 42 (KF-1) in addition to GPS signal receiver circuits and a microprocessor (not shown). The Kalman filter 50 (KF-2) includes a Kalman gain unit 52 which provides a gain (coefficient) to each parameter associated with position tracking operations.

The IMU 32 has inertial sensors and a microprocessor. The inertial sensors are created through MEMS (microelectro mechanical system) technologies to detect accelerations and angular rates of three coordinates of the vehicle. The microprocessor processes the detected signals from the inertial sensors. Because the integrated INS/GPS navigation system 20 includes inertial sensors, it can also estimate a vertical position of the vehicle with accuracy much higher than that of the ordinary GPS navigation system. The IMU 32 produces the output data, for example, 100 times per second (100Hz). The output data from the IMU 32 is supplied to the low-pass filtering unit 34 in which high frequency components thereof are removed. The output data from the low-pass filtering unit 34 is supplied to the navigation equation unit 36 where the current position, velocity and orientation of the vehicle are estimated through the inertial navigation technology.

The GPS receiver 40 receives signals from a plurality of satellites and calculates the estimated location and velocity of the vehicle by comparing clock signals and position and velocity data from the satellites. Typically, the GPS receiver 40 optimizes the obtained position and velocity data by the Kalman filter (KF-1) 42 to minimize the noises on the satellite signals. Typically, the GPS receiver 40 produces the position data every one second (1Hz).

The estimated position data from the INS 30 and the estimated position data from the GPS receiver 40 are combined by the Kalman filter (KF-2) 50 which optimally estimates, in real time, the states of the navigation system based on such noisy measurement data. The Kalman gain unit 52 provides weight or gain to each parameter in the measurement data. The output of the Kalman filter 50 is provided to the navigation equation unit 36 which calculates the estimated position of the vehicle which will be displayed on a navigation monitor screen (not shown).

In this example, the VDC controller 25 measures the output data of the IMU 32 through the low-pass filter 34 to determine whether the vehicle is currently in which one of the conditions defined in the present invention. As will be described in detail later, the present invention classifies the current vehicle condition as either a normal, cornering or stationary condition. The VDC controller 25 provides the measured data indicative of one of the predefined vehicle dynamics conditions to the Kalman filter 50 so that the Kalman filter 50 incorporates the measured data to further optimize the position data. The VDC controller 25 produces the measured data at a rate higher than GPS measurement, for example, ten times per second (10Hz).

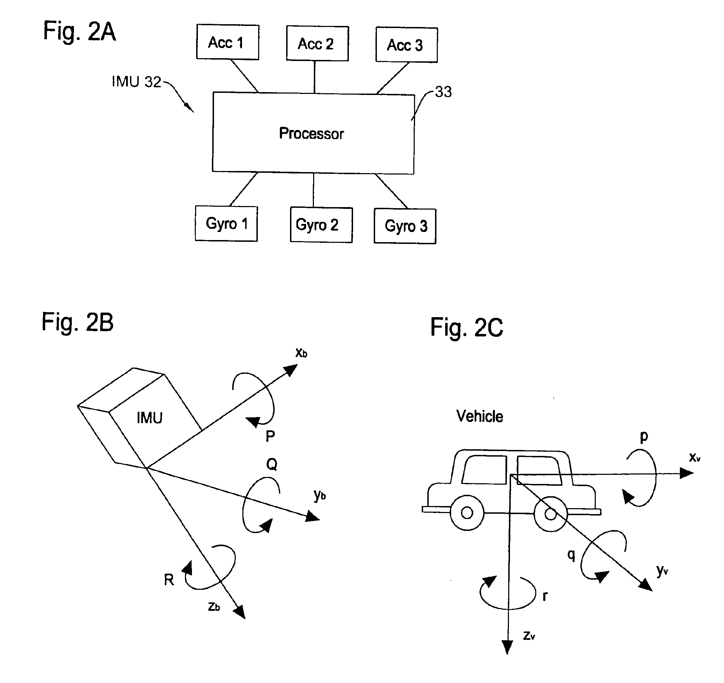

Figures 2A-2C are schematic diagrams showing the IMU 32 and the inertial sensors incorporated in the IMU 32. Figure 2A is a schematic block diagram showing a basic structure of the IMU 32 used in the INS 30 of Figure 1. The IMU 32 includes a processor 33, and the inertial sensors consisting of three accelerometers Acc 1-3 and three gyroscopes Gyro 1-3. The accelerometers Acc 1-3 detect accelerations in the three (X, Y, Z) coordinates of the vehicle, and the gyroscopes Gyro 1-3 detect angular rates about the three (X, Y, Z) coordinate directions of the vehicle. The processor 33 calculates the accelerations and angular rates based on the signals from the inertial sensors Acc 1-3 and Gyro 1-3.

Figures 2B and 2C are schematic diagrams depicting an IMU body coordinate system and a vehicle coordinate system, respectively. In Figure 2B, characters P, Q, and R represent the vehicle angular rates about the IMU coordinate components $x_b$, $y_b$, and $z_b$. In Figure 2C, characters p, q, and r represent the vehicle angular rates about the vehicle coordinate components $x_v$, $y_v$, and $z_v$, where p, q, r are the expressions simply transformed from P, Q, and R since the IMU 32 is mounted on the vehicle.

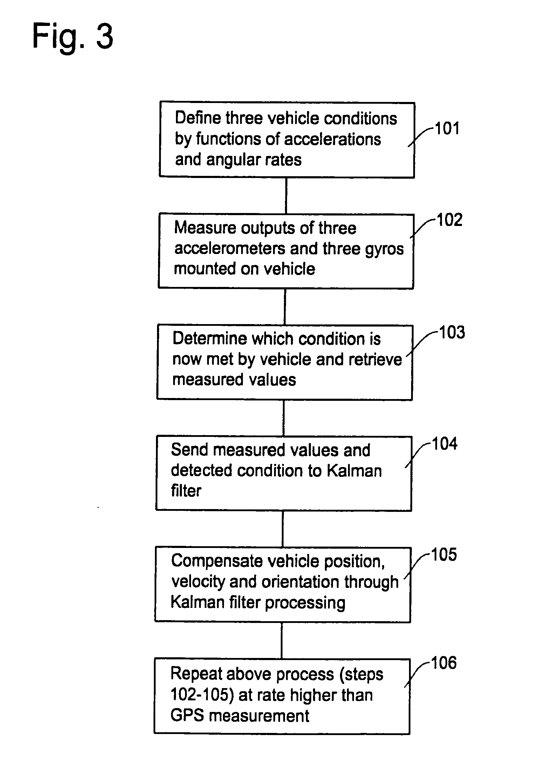

Figure 3 is a flow chart showing an example of basic operational process of the vehicle dynamics conditioning in accordance with the present invention. As noted above, the method of the present invention makes use of the vehicle dynamics conditions in addition to the GPS measurements for an integrated INS/GPS navigation system to achieve a high position tracking capability in spite of using low cost and noisy MEMS sensors. First, in the step 101, the process defines, in advance, the three vehicle conditions as functions of accelerations and angular rates. As noted above, the three conditions are a normal condition, a cornering condition, and a stationary condition of the ground vehicle.

Then, in the step 102, the integrated INS/GPS navigation system evaluates the outputs of three accelerometers and three gyroscopes in the IMU 32 mounted on the vehicle. Based on the outputs of the three accelerometers, the IMU 32 detects accelerations in the three (X, Y, Z) coordinates of the vehicle. Based on the output of the three gyroscopes, the IMU 32 detects angular rates in the three (X, Y, Z) coordinates of the vehicle. Within the context of the present invention, three coordinates X, Y, Z may also be referred to as forward, lateral and downward directions, respectively. Based on the accelerations and angular rates of the three coordinates of the vehicle, at the step 103, the VDC controller 25 (Figure 1) in the integrated INS/GPS navigation system 20 determines as to which vehicle dynamics condition corresponds to the current condition of the vehicle, and retrieves the measured values indicative of the determined condition.

In the step 104, the VDC controller 25 in the integrated INS/GPS navigation system 20 sends the measured values and the detected vehicle dynamics condition to the Kalman filter 50 (KF 2 in Figure 1) in the navigation system. The Kalman filter 50 performs a Kalman filter processing in the step 105 to obtain optimum values of the parameters showing the location and angle of the vehicle. During the Kalman filter processing, the Kalman filter 50 utilizes the measured values indicative of the current vehicle dynamics condition, thereby minimizing the position tracking errors of the navigation system.

In the step 106, the integrated INS/GPS navigation system 20 repeats the foregoing steps 102-105 to continuously optimize the position tracking accuracy. As noted above, the inertial sensors (accelerometers and gyroscopes) produce the sensor outputs 100 times per second (10OHz) or higher, the VDC controller 25 can easily provide the measure values indicative of the vehicle dynamics condition to the Kalman filter at the repetition rate higher than GPS measurement such as 10Hz. As known in the art, the position and velocity data from the GPS receiver indicating absolute position and velocity of the vehicle is produced at a typical rate of 1Hz, thus, the error correction based on the vehicle dynamics conditioning is conducted several times faster than that of the GPS receiver, thereby minimizing the error accumulation. As a result, even when sufficient GPS signals are unavailable for a long period of time such as 2 minutes, the integrated INS/GPS navigation system 20 of the present invention is able to maintain the relatively high tracking accuracy.

As mentioned above, the present invention defines the vehicle dynamics as three conditions; normal condition, cornering condition, and stationary condition as follows:

(1) Normal Condition: When the vehicle is driving straightly, vehicle-fixed $y_v$ and $z_v$ axis velocities are zero.

(2) Cornering Condition: When the vehicle is cornering, vehicle-fixed $x_v$ axis (forward) velocity can also be estimated using vehicle-fixed $y_v$ axis acceleration (centripetal acceleration) and vehicle-fixed $z_v$ axis angular rate in addition to the normal condition.

(3) Stationary Condition: When it is identified that the vehicle is stationary, all vehicle-fixed three-axis velocities and angular rates must be zero.

Each condition will be described in detail in the following:

Normal Condition

When large rotation is not detected, the following measurements are used in the Kalman filter 50 additionally to the GPS measurements:

$$v_{yv\_}obs = 0 \text{ m/s}, \ \sigma_{vyv} = \begin{cases} 0.01 \text{ m/s} \\ 0.1 \text{ m/s if } |r| > 2.3 \text{ deg/s (0.04 rad/s)} \end{cases}$$

$$v_{zv\_}obs = 0 \text{ m/s}, \ \sigma_{vzv} = \ 0.1 \text{ m/s}$$

where
$v_{xv\_}obs$, $v_{yv\_}obs$, and $v_{zv\_}obs$ are knowledge based vehicle velocity measurements with respect to the vehicle coordinate

system $x_v$, $y_v$, and $z_v$ axes, respectively (see Figures 2B and 2C),
$\sigma_{vxv}$, $\sigma_{vyv}$, and $\sigma_{vzv}$ are vehicle velocity measurement accuracy $\sigma$ (standard deviation) values for $v_{xv}\_obs$, $v_{yv}\_obs$, and $v_{zv}\_obs$, respectively

The output data of the gyroscopes are used after bias corrections. Note that $\sigma_{vxv}$, $\sigma_{vyv}$, $\sigma_{vzv}$ and threshold values are design parameters which may depend on the sensor performance and a designer's choice.

Cornering Condition

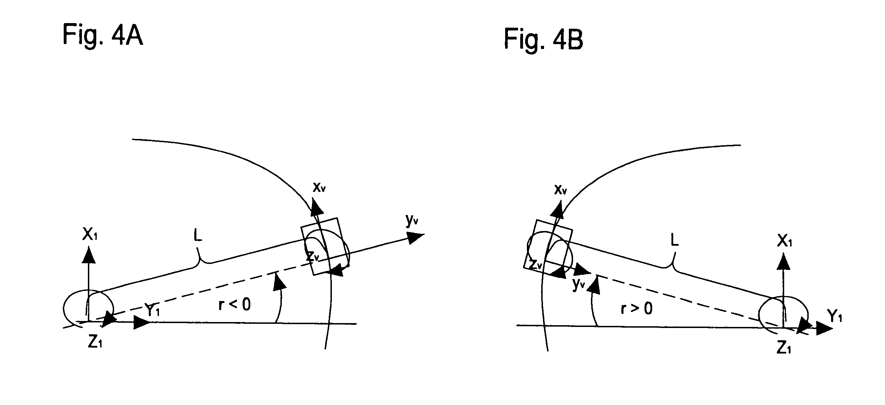

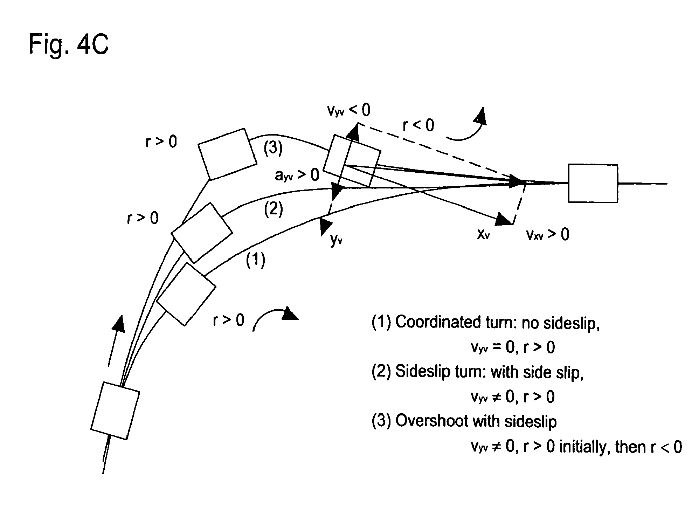

Figures 4A-4C illustrate vector patterns involved in cornering of a vehicle where Figure 4A shows a left cornering, Figure 4B shows a right cornering, and Figure 4C shows the cornering of the vehicle where the pattern (1) shows a coordinated turn, the pattern (2) shows a side slip turn, and the pattern (3) shows an overshoot and sideslip turn.
First, define large rotation to execute this condition as $|r| > 9.2$ deg/s (0.16 rad/s). When this applies, the following measurements are used in the Kalman filter 50 additionally to the GPS measurements:

$$v_{xv}\_obs = \begin{cases} \dfrac{a_{yv}}{r} \text{ m/s}, \sigma_{xv} = 0.3 \text{ m/s at initial cornering} \\[2em] -\dfrac{a_{yv}}{r} \text{ m/s}, \sigma_{xv} = 0.3 \text{ m/s when sign(r) flips} \end{cases}$$

$$v_{yv}\_obs = -0.04 \, \text{sign}(a_{yv}) \, |v_{xv}\_obs|, \sigma_{vyv} = 0.1 \text{ m/s}$$

$$v_{zv}\_obs = 0, \sigma_{zv} = 0.1 \text{ m/s}$$

where
$a_{xv}$, $a_{yv}$, and $a_{zv}$ are accelerometer outputs transformed into the vehicle coordinate system, where bias and gravity are calibrated by the Kalman estimates
The $v_{xv}$ estimation in the first row is obtained by the relationship between $a_{yv}$ and $r$ as explained in the following (see Figures 4A and 4B):
Left Turn: $r < 0$

$$v_{xv} = -Lr \qquad\qquad v_{yv} = \dot{L}$$

$$a_{xv} = -(2\dot{L}r + L\dot{r}) \qquad a_{yv} = \ddot{L} - Lr^2$$

Then,

$$\frac{a_{yv}}{r} = \frac{\ddot{L} - Lr^2}{r} = \frac{\ddot{L}}{r} - Lr = \frac{\ddot{L}}{r} + v_{xv}$$

Assuming $\dfrac{\ddot{L}}{r}$ is small,

$$v_{xv} \approx \frac{a_{yv}}{r}$$

Right Turn: r > 0

$$v_{xv} = Lr \qquad\qquad v_{yv} = -\dot{L}$$

$$a_{xv} = 2\dot{L}\dot{r} + L\dot{r} \qquad a_{yv} = -\ddot{L} + Lr^2$$

$$\frac{a_{yv}}{r} = \frac{-\ddot{L} + Lr^2}{r} = -\frac{\ddot{L}}{r} + Lr = -\frac{\ddot{L}}{r} + v_{xv}$$

Assuming $-\dfrac{\ddot{L}}{r}$ is small,

$$v_{xv} \approx \frac{a_{yv}}{r}$$

It should be noted that the important exception as defined with the opposite sign: a vehicle often overshoots with significant sideslip velocity, and the sign of r could change in the middle of cornering. This motion is illustrated by the trajectory (3) in Figure 4C using right turn cornering as an example. When the sign of r flips, we use

$$v_{xv\_}obs = -\frac{a_{yv}}{r}$$

This is justified by the following: assuming that instantaneous $v_{yv}$ will linearly decrease to 0 after dT seconds at the rate of the instantaneous $a_{yv}$,

$$v_{yv} + a_{ayv}\, dT = 0, \text{ or, } dT = -\frac{v_{yv}}{a_{yv}} \qquad\qquad (a)$$

Also, assuming a similar relationship between an instantaneous slip angle $\alpha$ and r

$$\alpha - r\, dT = 0, \text{ or, } \alpha = r\, dT$$

Notice that a small slip angle $\alpha$ is related to vehicle velocities as

$$\alpha \approx \tan \alpha = \frac{v_{yv}}{v_{xv}},$$

Hence,

$$\frac{v_{yv}}{v_{xv}} = r\,dT, \text{ or, } v_{xv} = \frac{v_{yv}}{r\,dT} \qquad\qquad \text{(b)}$$

From (a) and (b),

$$v_{xv} = -\frac{a_{yv}}{r}$$

Stationary Condition

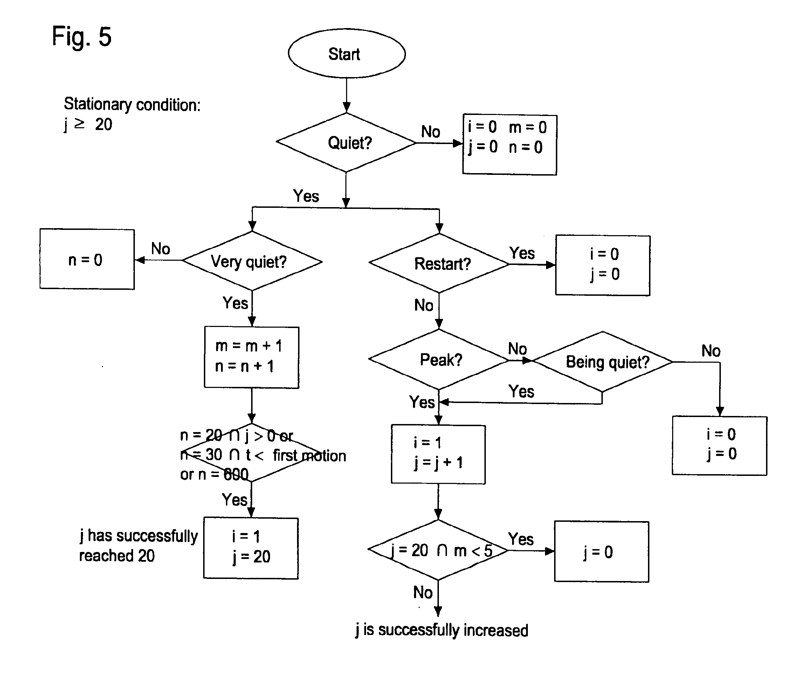

First, identify the stationary status through a procedure described by the flowchart in Figure 5. Key conditions in the flowchart are defined in the following:

• Quiet Condition

$$|p| < 0.46 \text{ deg/s} \cap |q| < 0.46 \text{ deg/s} \cap |r| < 0.57 \text{ deg/s} \cap$$

$$|a_{xv}| < 0.4 \text{ m/s}^2 \cap |a_{yv}| < 0.1 \text{ m/s}^2 \cap |a_{xv}| < 0.1 \text{ m/s}^2 \cap |v_{xv}| < 3 \text{ m/s}$$

Related Counters:
i = 1(On) or 0(Off): Quiet Flag to tell if Quiet Condition is met unless Restart Condition is on
j: continuous count of successful Quiet Condition during a single stationary event
This is the basic condition for quiet IMU output suggesting potentially stationary vehicle. The threshold values to bound sensor output may depend on IMU performance.

• Stationary Condition

$$j = 20$$

When j reaches 20, it is regarded as that the vehicle is stationary.

• Restart Condition

$$j \geq 20 \cap |a_{xv}| > 0.15 \ m/s^2$$

Even Quiet Condition is met, the vehicle could still be moving. For example, restarting motion from stationary condition can be very smooth without any peak in acceleration. Restart Condition will identify this case.

• Peak Condition

$$max\_ax > 0.6 \ m/s^2 \ where \ max\_ax = max(a_{axv}(t)) \ for \ t = [t - 1.5 \ s, \ t]$$

The threshold 0.6 m/s$^2$ is a design parameter depending on a designer's decision
When a vehicle stops by breaking, as the magnitude of the forwarding velocity decreases in a step-function manner, there must be a peak in forwarding acceleration max_ax will be used to judge if there was a peak. Normally, Peak Condition followed by Quiet Condition will identify that the vehicle is stationary.

• Being Quiet Condition

$$There \ existed \ i = 1 \ for \ past \ 0.5s$$

This means that if the vehicle is stationary but Quiet Condition does not follow Peak Condition, Quiet Condition must be continuing.

• Very Quiet Condition

This condition is the same as Quiet Condition, except

$$|a_{axv}| < 0.1 \ m/s^2$$

Related Counters:

    m: total count of successful Very Quiet Condition during a single stationary event
    n: continuous count of successful Very Quiet Condition during a single stationary event

This is a tighter condition for quiet IMU output. Not always, but in some cases this will tell us stationary condition.
The flow is executed at 10 Hz as an example here. When j reaches 20 or more, it is regarded as that the vehicle is stationary.
When stationary status is detected by j = 20 or more, the following measurements are used in the Kalman filter additionally to the GPS measurements:

$$v_{xv\_}obs \ = 0, \ \sigma_{vxv} = \ 0.001 \ m/s$$

$$v_{yv\_}obs \ = 0, \ \sigma_{vyv} = \ 0.001 \ m/s$$

$$v_{zv\_}obs = 0, \sigma_{vzv} = 0.001 \text{ m/s}$$

$$P = 0, \sigma_P = N_{\omega x}$$

$$Q = 0, \sigma_Q = N_{\omega y}$$

$$R = 0, \sigma_R = N_{\omega z}$$

where

$\sigma_P$, $\sigma_Q$, and $\sigma_R$ are rate gyro measurement accuracy $\sigma$ (standard deviation) values for P, Q, and R, respectively

$N_{\omega i}$, i = x, y, z; are rate gyro output white noise $\sigma$ values measured at a certain frequency

Use of the conditions for IMU outputs is up to a designer's choice. Application of Stationary Condition will stop wandering position estimates while the vehicle is stationary.

Application of the conditions prescribed in the present invention does not need to wait 1 Hz GPS measurement cycle. The VDC controller 25 sends the measured data indicative of one of the three conditions to the Kalman filter (KF 2) 50 at a frequency higher than GPS measurement such as 10 Hz. Thus, the Kalman filter's update is executed, for example, at 10 Hz based upon the normal condition and the cornering condition, and at 1 Hz based upon the stationary condition and the GPS measurement. This means that the error correction based on the vehicle dynamics conditioning is conducted faster than that of the GPS measurement, thereby minimizing the error accumulation.

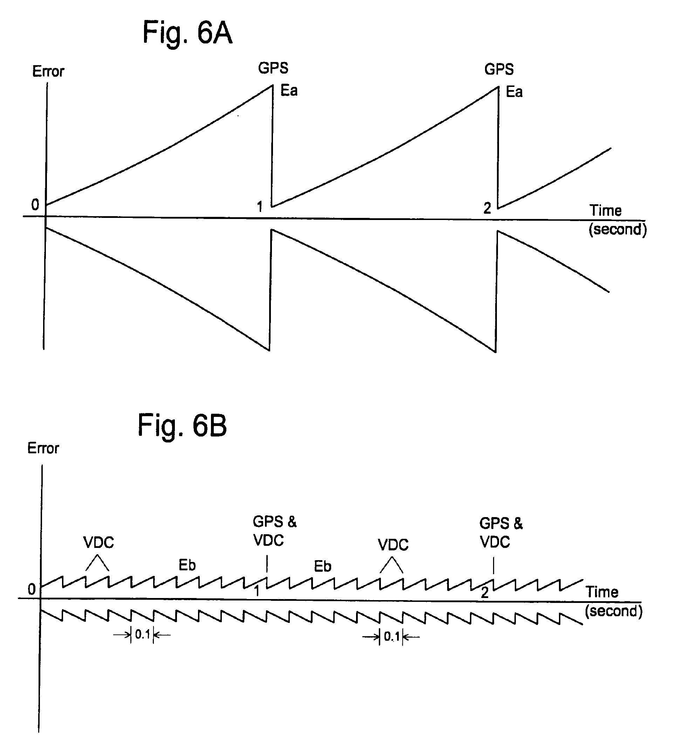

Figures 6A and 6B schematically show such effects of the present invention in which patterns of tracking error and correction timings in the integrated INS/GPS navigation system are illustrated. Figure 6A is a pattern involved in the conventional technology, and Figure 6B is a pattern incorporating the vehicle dynamics conditioning of the present invention. As noted above, the GPS measurement is given to the Kalman filter (KF 2) 50 with a repetition rate of 1 Hz. During that period (one second), as shown in Figure 6A, the position tracking errors of the INS are accumulated, and the accumulated errors are corrected by the GPS measurement at every one second since the GPS measurement provides the absolute position and velocity of the vehicle. As shown in Figure 6A, at the last stage of the one second period, the accumulated errors reach a level Ea.

As noted above, the vehicle dynamics conditioning is conducted at the repletion rate higher than GPS measurement, the time period (less than 1 second), which is several times shorter than that of the GPS measurement. Thus, as shown in Figure 6B, at the last stage of the VDC correction time period, the accumulated errors reach a level Eb which is much smaller than the error level Ea. As a result, even when sufficient GPS signals are unavailable for a long period of time such as 2 minutes, the integrated INS/GPS navigation system of the present invention is able to maintain the relatively high tracking accuracy

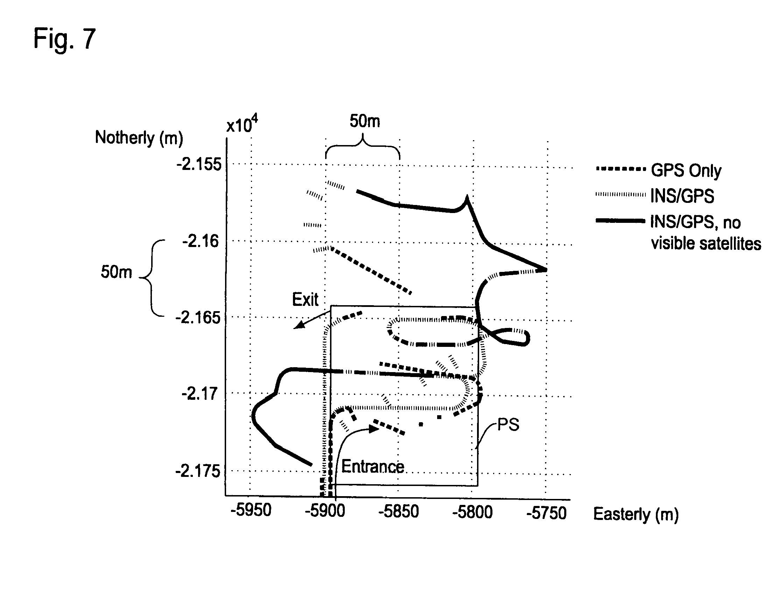

As noted above, in addition to the conventional Kalman filtering process, the measured data based upon the vehicle dynamics condition measured by the inertial sensors are incorporated in the Kalman filtering processing. The measured data are indicative of one of the three predefined vehicle dynamics conditions which help optimizing the position tracking through the Kalman filtering processing. Figures 7-10 show the experimental results to show the effectiveness of the present invention which is demonstrated by conducting on-road data acquisition and formulating a loosely coupled INS/GPS system on a computer to see navigation results in a post-process manner. In Figures 7-10, vehicle trajectories estimated by integrated INS/GPS systems are shown where the vehicle is running through the first floor and underground of a multi-storied parking structure PS.

Figure 7 shows the results using a conventional loosely coupled INS/GPS system. The vehicle position estimates are shown by thin dots and solid lines, where the solid lines represent the situation of no visible satellites. GPS solutions are also shown by thick dots for comparison. The entire drive from the entrance to exit takes about 7.5 minutes in which total GPS dropouts (solid lines) occasionally last up to 136 seconds. Because of this unfavorable GPS environment, the vehicle position estimates given by the INS/GPS system are far apart from the actual trajectory.

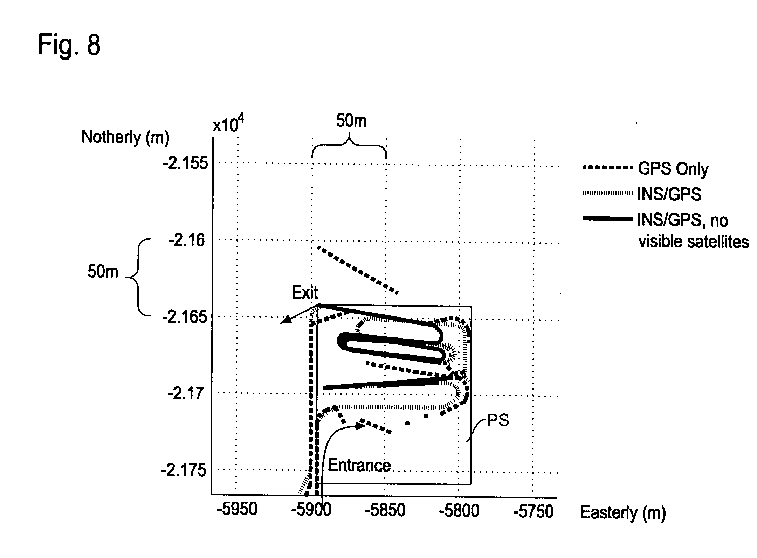

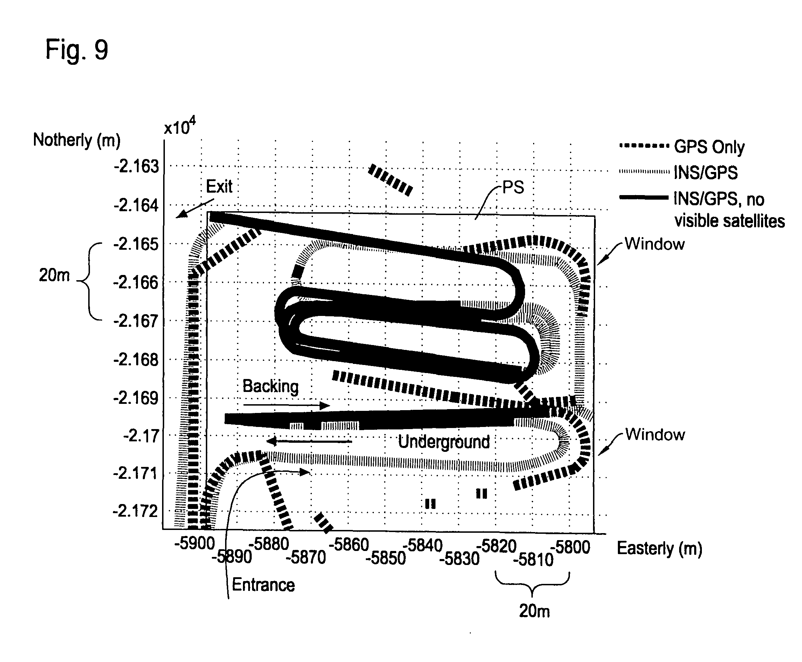

Meanwhile, Figures 8 and 9 show the results from the loosely coupled INS/GPS system incorporating the present invention where Figure 9 is an enlarged view of Figure 8. Note that the horizontal divergent behaviors are significantly improved where the vehicle motion is reasonably accurately recovered with small yaw angle divergence. The GPS solutions shown by the thick dots provide accurate position tracking only at the areas close to the windows of the parking structure PS where GPS signals are available. Even when the vehicle is in the underground of the parting structure PS, the vehicle motion is traced with sufficient accuracy.

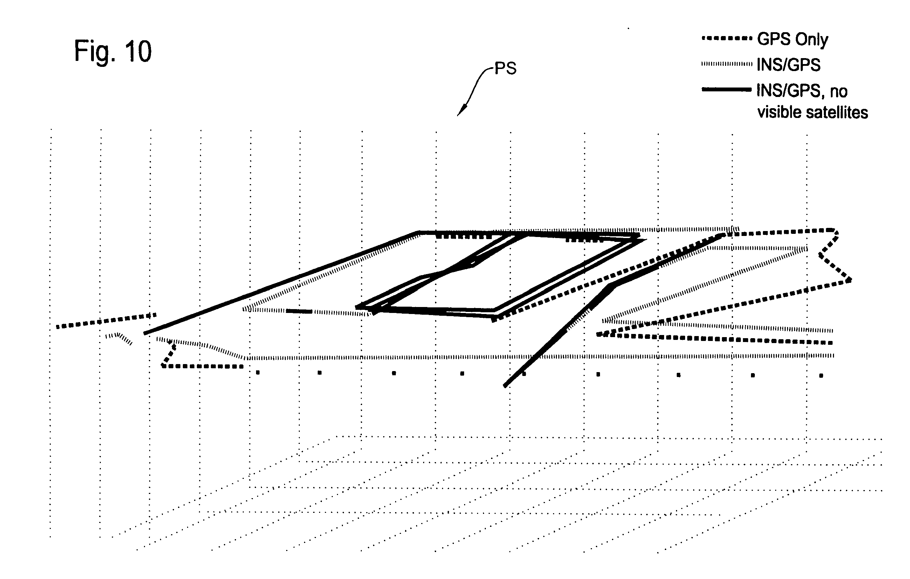

The three dimensional view of Figure 9 is shown in Figure 10 which demonstrates that vertical divergence is also very small (within $\pm 2m$ between the heights at the entrance and exit). The path of the center slope connected to the underground level is also accurately recovered. Note that the GPS-only solution fails to show the three dimensional tracking accuracy because its vertical positioning accuracy is much lower than that of the INS/GPS solution.

As has been described above, according to the present invention, in addition to the conventional integrated INS/GPS navigation system in which outputs of the GPS and the INS are combined by using the Kalman filter, the measured values indicative of predefined vehicle dynamics conditions are also provided to the Kalman filter to obtain optimum estimates of the current position, velocity and orientation of the ground vehicle. As a result, errors involved in tracking the motion of the vehicle is corrected not only by the GPS but the vehicle dynamics conditioning as well. Since the vehicle dynamics conditioning is repeated by a frequency much higher than that of the GPS output, the amount of accumulated error becomes small because the error is corrected within a short period of time. Further, since the accumulated error becomes small, low cost and noisy MEMS sensors can be used in the integrated INS/GPS navigation system.

In a further aspect, the invention concerns an integrated inertial navigation system/global positioning system navigation system implementing microelectro mechanical system, MEMS, sensors for a ground vehicle, comprising means for defining vehicle dynamics conditions in advance as a function of accelerations and angular rates obtained from inertial sensors; means for receiving the accelerations and angular rates corresponding to coordinates of a ground vehicle from inertial sensors mounted on the inertial navigation system, INS; means for detecting a current dynamics condition of the vehicle by evaluating the accelerations and angular rates from the inertial sensor; means for sending measured data indicative of the detected vehicle dynamics condition to a Kalman filter which integrates the INS and global positioning system, GPS, to conduct a Kalman filter processing incorporating the vehicle dynamics condition; and means for repeating the steps (b) to (d) of claim 1 to obtain optimum estimates of current vehicle position, velocity and orientation.

**Claims**

1.  A navigation method of conditioning ground vehicle's dynamics for a microelectro mechanical system based integrated intertial navigation system/GPS navigation system (20), comprising the steps of:

    (a) defining vehicle dynamics conditions in advance as a function of accelerations and angular rates obtained from inertial sensors (32);
    (b) receiving the accelerations and angular rates corresponding to coordinates of a ground vehicle from inertial sensors (32) mounted on the inertial navigation system, INS, (30);
    (c) detecting a current dynamics condition of the vehicle by evaluating the accelerations and angular rates from the inertial sensor;
    (d) sending measured data indicative of the detected vehicle dynamics condition to a Kalman filter (50) which integrates the INS and GPS to conduct a Kalman filter processing incorporating the vehicle dynamics condition; and
    (e) repeating the steps (b) to (d) to obtain optimum estimates of current vehicle position, velocity and orientation.

2.  The navigation method as defined in Claim 1, wherein one of said vehicle dynamics conditions is a normal condition wherein lateral and downward velocities are assumed to be zero in terms of a vehicle-fixed coordinate system.

3.  The navigation method as defined in Claim 1 or 2, wherein one of said vehicle dynamics conditions is a cornering condition wherein a forward velocity is estimated from a lateral acceleration and a directional angular rate, and a lateral velocity is assumed to be a small value, and a downward velocity is assumed to be zero, in terms of a vehicle-fixed coordinate system.

4.  The navigation method as defined in one of Claims 1-3, wherein one of said vehicle dynamics conditions is a stationary condition wherein a vehicle's all three coordinate velocities are assumed to be zero after detecting a stopping status.

5.  The navigation method as defined in one of Claims 1-4, wherein the inertial sensors are configured by three-axis accelerometers and three-axis gyroscopes in which accelerations corresponding to coordinates of the vehicle are detected by the three accelerometers and the angular rates corresponding to coordinate directions of the vehicle are detected by the three gyroscopes.

6. The navigation method as defined in Claim 3, wherein the forward velocity of the vehicle in the cornering condition is estimated by a lateral acceleration and a directional angular rate of the vehicle when the vehicle is cornering.

7. The navigation method as defined in Claim 4, wherein the inertial sensors are configured by three accelerometers and three gyroscopes in which the inertial sensors are configured by three accelerometers and three gyroscopes in which outputs of the gyroscopes are assumed to be zero in the stationary condition.

8. The navigation method as defined in one of Claims 1-7, wherein said measured data indicative of the detected vehicle dynamics condition is sent to the Kalman filter at a rate higher than that of a GPS output which is indicative of absolute location and velocity of the vehicle.

9. The navigation method as defined in Claim 8, wherein said measured data indicative of the detected vehicle dynamics condition is sent to the Kalman filter at a rate of 10Hz and the GPS output indicative of the absolute location and velocity of the vehicle is sent to the Kalman filter at a rate of 1Hz.

10. An integrated inertial navigation system/global positioning system navigation system implementing microelectro mechanical system, MEMS, sensors for a ground vehicle, comprising:

an inertial navigation system (30), INS, having an inertial measurement unit (32) which incorporates MEMS sensors;
a global positioning system, GPS, receiver (40) which receives satellite signals from a plurality of satellites to produce GPS measurements indicating absolute position and velocity of the ground vehicle;
a Kalman filter (50) which combines outputs of the INS (30) and the GPS receiver (40) and performs a Kalman filter processing; and
a vehicle dynamics conditioning controller (25) which controls an overall operation of the navigation system including vehicle dynamics conditions detected from output of the MEMS sensors;
wherein said vehicle dynamics conditions include a normal condition, a cornering condition and a stationary condition of the ground vehicle.

11. The integrated INS/GPS navigation system as defined in Claim 10, wherein said MEMS sensors are configured by three-axis accelerometers and three-axis gyroscopes in which accelerations corresponding to coordinates of the vehicle are detected by the three-axis accelerometers and the angular rates corresponding to coordinate directions of the vehicle are detected by the three-axis gyroscopes.

12. The integrated INS/GPS navigation system as defined in Claim 10 or 11, wherein one of said vehicle dynamics conditions is a normal condition wherein lateral and downward velocities are assumed to be zero in terms of a vehicle-fixed coordinate system.

13. The integrated INS/GPS navigation system as defined in one of Claims 10-12, wherein one of said vehicle dynamics conditions is a cornering condition wherein a forward velocity is estimated from a lateral acceleration and a directional angular rate, and a lateral velocity is assumed to be a small value, and a downward velocity is assumed to be zero, in terms of a vehicle-fixed coordinate system.

14. The integrated INS/GPS navigation system as defined in one of Claims 10-13, wherein one of said vehicle dynamics conditions is a stationary condition wherein a vehicle's all three coordinate velocities are assumed to be zero after detecting a stopping status.

## Fig. 1

a: accelerations
ω: angular rates

Vehicle

Satellite

**Loosely Coupled INS/GPS** — 20

**INS** — 30

IMU — 32 → Low-Pass Filtering — 34 → Navigation Equation — 36

a, ω →

State Estimates →

VDC Controller — 25

**KF 2** — 50, 52

Kalman Gain

GPS Receiver — 40

KF 1 — 42

GPS KF Outputs:
$\lambda, \Phi, h, V_N, V_E, V_D$

Conditions (1)-(3)

EP 1 903 306 A2

Fig. 2A

Fig. 2B

Fig. 2C

# Fig. 3

Define three vehicle conditions by functions of accelerations and angular rates ⟋101

Measure outputs of three accelerometers and three gyros mounted on vehicle ⟋102

Determine which condition is now met by vehicle and retrieve measured values ⟋103

Send measured values and detected condition to Kalman filter ⟋104

Compensate vehicle position, velocity and orientation through Kalman filter processing ⟋105

Repeat above process (steps 102-105) at rate higher than GPS measurement ⟋106

Fig. 4A

Fig. 4B

# Fig. 4C

$v_{yv} < 0$

$r < 0$

$r > 0$    (3)

$a_{yv} > 0$

$r > 0$    (2)

$r > 0$    (1)

$y_v$

$x_v$    $v_{xv} > 0$

(1) Coordinated turn: no sideslip,
$$v_{yv} = 0,\ r > 0$$
(2) Sideslip turn: with side slip,
$$v_{yv} \neq 0,\ r > 0$$
(3) Overshoot with sideslip
$$v_{yv} \neq 0,\ r > 0 \text{ initially, then } r < 0$$

EP 1 903 306 A2

# Fig. 5

Stationary condition:
$j \geq 20$

**Start**

Quiet? — No → $i = 0 \quad m = 0$ / $j = 0 \quad n = 0$

Yes

Very quiet? — No → $n = 0$

Yes

$m = m + 1$ / $n = n + 1$

$n = 20 \cap j > 0$ or $n = 30 \cap t <$ first motion or $n = 600$

Yes

j has successfully reached 20 — $i = 1$ / $j = 20$

Restart? — Yes → $i = 0$ / $j = 0$

No

Peak? — No → Being quiet? — No → $i = 0$ / $j = 0$

Yes ← Yes

$i = 1$ / $j = j + 1$

$j = 20 \cap m < 5$ — Yes → $j = 0$

No

j is successfully increased

EP 1 903 306 A2

## Fig. 6A

## Fig. 6B

Fig. 7

EP 1 903 306 A2

EP 1 903 306 A2

Fig. 8

## Fig. 9

EP 1 903 306 A2

Fig. 10

PS

-------- GPS Only
<br>INS/GPS
<br>INS/GPS, no visible satellites